# EUROPEAN PATENT SPECIFICATION

(11) **EP 1 260 109 B1**
(45) Date of publication and mention of the grant of the patent: **26.05.2010**
(21) Application number: 01902937.0
(22) Date of filing: 31.01.2001
(51) Int. Cl.: H04W 48/18

(54) **METHOD FOR SELECTION OF A RADIO NETWORK BY A MULTIMODE TERMINAL, AS WELL AS SYSTEM AND TERMINAL UTILIZING THE METHOD**
VERFAHREN ZUR AUSWAHL EINES FUNKNETZES DURCH EIN MULTIMODALES ENDGERÄT, SOWIE SYSTEM UND ENDGERÄT ZUR VERWENDUNG DES VERFAHRENS
PROCEDE DE SELECTION DE RESEAU DE RADIOCOMMUNICATION PAR UN TERMINAL MULTIMODE, AINSI QUE SYSTEME ET TERMINAL UTILISANT CE PROCEDE

(30) Priority: 02.02.2000 SE 0000335
(43) Date of publication of application: 27.11.2002
(73) Proprietor: TELIASONERA AB, 106 63 Stockholm (SE)
(72) Inventor: PERSSON, Sofi, S-754 30 Uppsala (SE); CEDERVALL, Catarina, S-226 53 Lund (SE)
(74) Representative: Hopfgarten, Nils
(86) International application number: PCT/SE2001/000188
(87) International publication number: WO 2001/058190

(56) References cited:
- EP-A1- 0 899 977
- EP-A1- 0 980 190
- EP-A2- 0 781 064
- EP-A2- 0 948 226
- WO-A1-99/40746
- GB-A- 2 284 964
- US-A- 5 475 677

## Description

### FIELD OF THE INVENTION

The present invention relates to a method for a mobile multimode terminal in a UMTS-system where the terminal can use a plurality of different radio interfaces to get access to the user's UMTS-services within one and the same subscription of via different operators. The invention also relates to a corresponding UMTS-system and such a multimode terminal. The terminal is primarily supposed to be a data communication terminal which, however, also can be used for voice calls.

### Brief about UMTS

UMTS (Universal Mobile Telecommunication Systems) is the name of mobile system of the third generation. The aim of UMTS is to complete existing mobile systems with in the first place multimedia services and data services with higher bit rate than the mobile systems of today. The real novelty of UMTS will be the radio interface, UTRAN (UMTS Terrestrial Radio Access) which makes use of new technology to provide high bit rates to the users, for instance from 364 kbit/s up to 2 Mbit/s. UMTS will be based on an evolution of the GSM-systems of today and tomorrow when the existing GSM-network (the 900 and 1800 band) is extended with GPRS and the radio interface of UMTS is connected to the "background" network of GPRS. The radio interface of UMTS will consist of one FDD-mode and one TDD-mode.

In the FDD-mode, all users will use the same frequency spectrum, but will be separated by means of codes, whereas in the TDD-mode a plurality of users will share one time slot by means of codes. The FDD-band will probably be licensed and the TDD-band not licensed. This results in that public UMTS-services will be offered via FDD-modems and that TDD-modems in the first place will be utilized for private applications. There, however, exist operators who may have the intention to provided public applications also in TDD-modems.

UTRAN will in the first phase be extended in "covering islands" and be based on FDD-modems. By using GSM's radio access in areas where the covering has not yet been extended, the users can, multimode terminals provided, get access to the major part of their services, though with somewhat lower capacity, everywhere already from the beginning.

To make it possible for the user to make use of services in UMTS, it is required that a USIM-card, with identities and access information is available in the terminal. This USIM-card corresponds to the SIM-card, which today is utilized in GSM.

At connection of the terminals to the system, the mode which in the first hand shall be utilised shall be connected. However, there may at the connection be a plurality of connection alternatives, at which the mode which from different aspects is the most suitable shall be selected. Said aspects can on the one hand relate to which network said connection shall be made to, on the other which form of communication that shall be utilized at the intended communication. Further, there shall be surveillance regarding contact with the network to which connection has been made, as well as possibility to switch a communication in progress from one system to another network when the conditions for this is favorable. These matters have not been of current interest in existing radio communication networks, so the problems that now will arise at the introduction of the future UMTS-system has previously not been of current interest.

Further, there are need to in different ways prioritize in which order the different modes shall be connected, respective how the change between the different systems shall be performed with regard to different time intervals that shall be defined at different times.

### PRIOR ART

In the mobile telephony there are at present a number of different communication systems utilized, where each system has its characteristics and protocols. These systems are normally not compatible with each other. The radio networks which at present are utilized imply that the mobile units which are utilized belong to respective system. Possibility to utilize a terminal, intended for communication in a system which is not in accordance with the protocol that is used in another system, is lacking. In the future UMTS-system, different basic functions are intended to be included in the system, at which the terminal shall have ability to connect to the system via different protocols and/or functionality. It shall be possible to utilize the terminal for connection to the different systems that are available. The different possible searches towards the system is in this connection described as different modes by which the terminal can connect to the system.

EP 0 980 190, which is a prior art document falling under Article 54 (3) EPC, discloses a multi-mode telecommunication device which is able to communicate in a plurality of telecommunication bands of at least one technically supported telecommunication mode, or in at least one telecommunication band of a plurality of technically supported telecommunication modes, each telecommunication mode having an associated telecommunication network.

EP 0 781 064 describes a multi-mode mobile terminal maintaining a prioritized list of available networks. Access to the various networks is then based on the user's need. A first type of access is automatic and requires little or no user involvement. A second type of access is to a user-specified network, and a third type of access is to a user-specified service which is supported by at least one of the networks.

EP 0 899 977 describes a network list attachment technique for mobile phones. Each mobile phone has a list of possible networks to which it could be connected. The list is updated automatically.

GB 2 284 964 discloses a radio telephone operable on a plurality of radio systems. The telephone has a memory storing ID codes of systems together with priority ranking information relating to the systems. In a system selection procedure, the subscriber unit is set to the control channel of each system in turn to sense for the corresponding ID code transmitted by the system on the control channel. The unit is then set to the control channel of the system having the highest priority of those which are receivable.

US 5 475 677 describes a TDM/TDMA digital telephone system using time multiplexed periodic frame structures for both modes and a single frequency synthesiser which does not have to switch quickly between frequencies.

EP 0 948 226 discloses a priority channel search, based on spectral analysis and signal recognition, e.g. for mobile stations.

### TECHNICAL PROBLEM

Different radio interface, for instance ISM, GPRS, UMTS FDD and UMTS TDD, will in the future cooperate to give the users access to their services everywhere. This means that the UMTS-terminal will be able to register (itself) in many different networks and at certain occasions there will be more than one possible network accessible. The present invention aims at solving the problem which occurs when the terminal shall select network in a radio environment with a plurality of different radio access networks accessible, and when this environment is changed when the terminal, which is a mobile terminal, is moved.

New services which are introduced in UMTS will primarily be data services, so the invention will in the first place be utilized in connection with a data communication terminal, which is also intended to be utilized as voice terminal via for instance IP-telephony or circuit-switched GSM. The terminal shall for instance be able to operate towards the modes GSM, GPRS, UMTS FDD and UMTS TDD, i.e. the terminal has a number of different systems and radio interfaces to select from.

### THE SOLUTION

The above discussed problem is solved according to the invention by a method according to claim 1, a system according to claim 6, and a terminal according to claim 12. The present invention thus relates to a method for selection of radio network when a terminal is allowed to select between a plurality of accessible radio networks. The terminal ranks the accessible radio networks according to a given priority and connects to that radio network which has been given highest priority. The radio networks are allowed to be of different kind, for instance GSM, GPRS, WLAN etc. The terminal is allowed to communicate with the different radio networks at which a priority list defines an order of precedence between the networks. Selection of network is made by means of the priority list. When the terminal loses contact with the selected radio network, the terminal checks whether contact with another radio network can be established. It is further checked whether network with higher priority than the utilized one is available. Connection is after that made to a network which has highest priority among the available networks.

The invention further relates to a system including a number of terminals which can be connected two accessible radio networks. At connection to a radio network the terminal selects the radio network which has been allocated a highest priority. The terminal further adapts to a signaling system which is utilized by the selected radio network. Further, the terminals check whether contact with the selected radio network is maintained, and if network with higher priority is accessible. A check is also made as to whether a found radio network with higher priority than the utilized network is lasting or not. In a corresponding way is checked if loss of contact with the appointed radio network is permanent or not. In the terminals there also are means for identification of the different types of networks, at which the terminals can be adjusted between a number of the different types of networks. The radio networks are allowed to operate according to different principles such as GSM, GPRS, UMTS FDD, UMTS TDD etc. In the FDD-system, a number of terminals share one and the same frequency, at which the own information is distinguished by codes. In the TDD-system, a number of terminals share the same time slot where the information to respective terminal is identified by means of codes. To make it possible for the terminal to distinguish between the different radio networks, and to adjust itself, a USIM is utilized where there is information which both appoints the order of precedence between the radio networks and indicates which protocol that shall be utilized in respective network. At scanning of accessible radio networks a parameter, "n", is utilized which is stepped, at which tire value of the parameter appoints a specific radio network.

The appointment is made by means of a priority list. Parameter, n, takes a number of values corresponding to the number of networks that the terminal has possibilities to connect to. The priority list then appoints the radio network in the order of priority that the terminal/user wants to utilize the networks. Further, the invention relates to a terminal to be utilized at selection of one of several accessible radio networks. The terminal ranks radio networks according to a given priority and connects to that one of the radio networks which has been given the highest rank. Within certain time intervals it is checked whether radio network with higher rank than the utilized network is accessible. Further, it is checked whether the connection to the selected radio network is maintained or not. When network with higher priority is available, a check is made whether the found network has permanent contact with the terminal or not. Said contact is regarded to be permanent when the contact has had a duration which exceeds a value of which has been appointed to x seconds. In a corresponding way it is checked whether the contact with the selected network is maintained or not: at interruption/ break in the contact between the radio network and the terminal during periods longer than y seconds, the contact with said radio network is regarded as lost. At search for accessible radio network, a step mechanism is run through, the value of which appoints the accessible radio networks in the order of priority that is indicated in the priority list. The terminal further includes functions to adapt to the functionality and way of operation of the different radio networks, which information is indicated on an identity and access information card (USIM) in the terminal.

### DESCRIPTION OF FIGURES

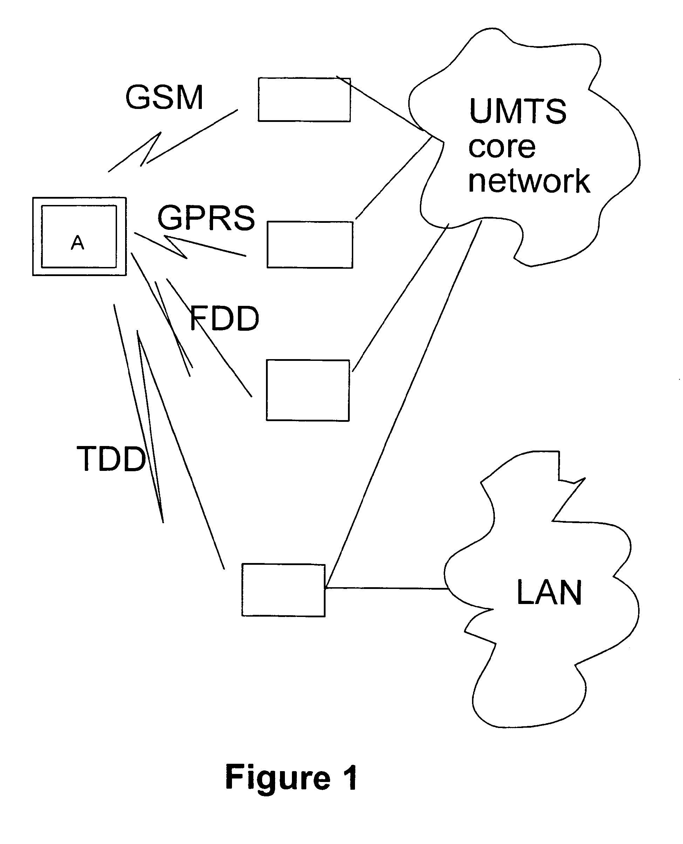

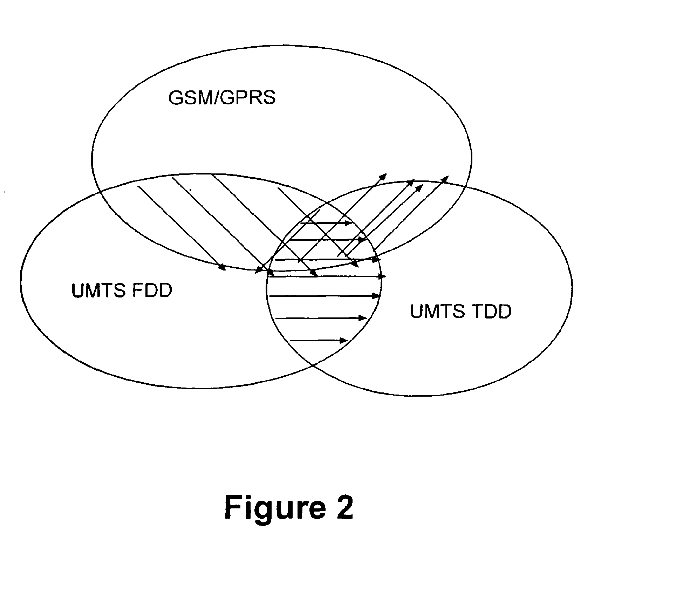

Figure 1 and 2 shows how a terminal can be utilized for communication between different radio networks.
Figure 3 shows a flow chart over the invention.

### PREFERRED EMBODIMENT

### Designations

- GSM: Global System for Mobile Communications
- UMTS: Universal Mobile Telecommunication System
- UTRA: UMTS Terrestrial Radio Access
- SIM: Subscriber Identity Module
- TDD: Time Division Multiplex
- FDD: Frequency Division Multiplex
- UTRAN: UMTS Terrestrial Radio Access Network
- USIM: UMTS Subscriber Identity

A user has a terminal by means of which he/she communicates via a number of different networks, such as GSM, UMTS etc. For the purpose the user's terminal is arranged to communicate with a number of different modes, i.e. the terminal contains functions which allow communication via different interfaces and radio networks. At call, the terminal checks which networks that are accessible and connects to the network which has been allocated highest priority. This priority is individual for the user and/or the terminal. Connection consequently is made to the network that best corresponds to the actual use. The user can utilize the terminal for different purposes, for instance voice or data communication. During the communication the terminal checks whether the connection to the network in question is intact or not. In case that the connection is not intact, a check is made whether the break is permanent or not. In the case that a temporary break is established, the selected network is retained in the continued communication. If, on the other hand, it is established that the contact with the selected radio network is permanently broken, the terminal scans accessible networks and establishes a connection to that of the accessible networks which has been allocated highest priority among accessible networks. During the communication in progress, the terminal continuously checks whether the connected network has highest priority or not.

If connection has been made to a network of lower priority, is checked whether network with higher priority is accessible or not. If there sexists network with higher priority, the terminal checks whether it has possibility to connect to a network of higher priority than the one that at present is utilized. If it is established that such a network is accessible and that the radio transmission is of sufficiently high quality, the connection is made to the new network in question over which the communication from then on is maintained until a network with higher priority is found, or that coverage for this network is lost and connection again is made to a network with lower priority.

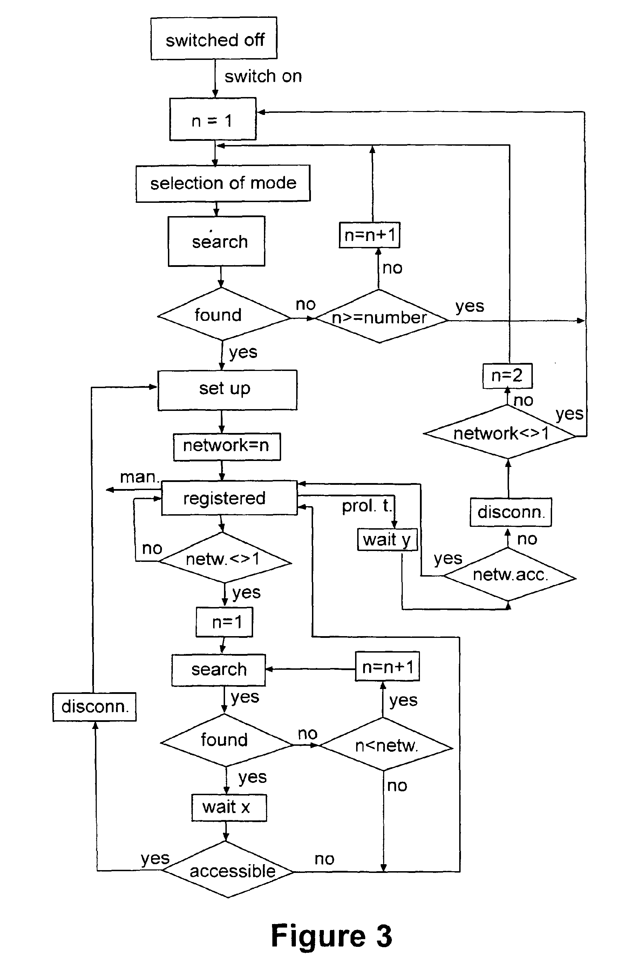

In the following, the invention is described in connection with the flow chart in Figure 3. The description starts from the upper part of the flow chart where the terminal is supposed to be switched off, and at activation, switched on, of the terminal, a parameter, "n", is set to the value of 1. The parameter "n" appoints one to the parameter setting corresponding selection of mode. Said selection of mode is based on a priority list where different connections in one for the terminal established order has been defined. Said priority list can differ between different users, respective for different applications at the individual user. Setting up of the priority list can on the one hand be made by the user, and on the other by anyone who is responsible for the system. The parameter, "n", consequently appoints one of a plurality of possible connections, whereupon the terminal tries to connect to the appointed network. If contact with the network has not been made, is checked whether the parameter, "n", is larger than, or equal to, a parameter, "number'", which indicates the number of possible selections of modes which are possible in the specific case. If the parameter, "n" , is smaller than, "number", the parameter, "n", is stepped one step, whereupon a new selection of mode is made, and new attempts at searching is made. In the cases the parameter, "n", adopts a value which is larger than, or equal to, "number", the parameter, "n", is restored to the value of 1.

After that, new attempts are made to get contact with any of the networks which are included in the subscriber's subscription, until contact has been established, or the subscriber stops the attempt to establish connection. When a network has been found, connection to said network is established and a parameter, "networks", is set to the same value as the parameter, "n". After that, an indication is made that registration has been performed, whereupon a check is made whether the performed connection has been made to a network with highest priority or not. This is made by checking whether the parameter, "network", is equal to 1. If that is the case, a check is made again whether the terminal is still registered or not. In case that the reception conditions is approaching a lower limit, there is a waiting during a period of time corresponding to a parameter, "y", which is set to a value that shall be waited for before decision is made whether contact with the utilized network has been lost or not. Has the reception conditions not been changed or been improved, the system returns to recording the network as registered. If, on the other hand, it has been recorded that contact with the network has been lost, disconnection is made, whereupon a check is made whether parameter, "network", is different from 1, or not. If the parameter is equal to 1, said parameter, "n", is set to 1, otherwise to 2. After that, selection of mode is made as has been described above.

We will now return to the square "registered". When it is established that parameter, "network", is different from 1, parameter, "n", is set to 1, whereupon search for the network that has highest priority is made, and if this network is not accessible, it is checked whether the parameter, "n", is smaller than parameter, "network", and if that is the case, parameter, "n", is stepped forward one step whereupon new search takes place. If no network is found, the algorithm is given the state "registered", after which a new search for network can be initiated.

In cases when network has been found, the system waits a period of time, "x", before check is made whether the found network is accessible or not. If network is not accessible, the system will return to the state "registered". In case that the found network is accessible, the used network is disconnected, whereupon set up of the found network is made and check proceeds as has been described above.

The user is further allowed to manually select the operator/network that shall be utilized. This selection can be made whenever the user so wishes.

The invention consequently consists of:
1. A network algorithm which describes how the terminal selects to which network it shall connect when it has possibility to lock itself to a plurality of networks. Further, the algorithm describes how the terminal shall function when it loses coverage from current network and how search for network with higher priority shall be made. The algorithm is shown in Figure 3.
2. Priority lists according to which the terminal shall search for networks to register in. These lists can be determined by the user or by operators.
3. The possibility of a multimode terminal to listen for and identify a plurality of different systems with regard to quality and priority.

In the network selection algorithm two parameters "x" and "y" are used. These indicate periods of time the terminal shall wait before a change of network is made. These periods of waiting shall be selected so that unnecessary signaling, as a consequence of that successive connections and disconnections are performed when the terminal is in the interface between two networks, is avoided. At selection of periods of waiting it is also important to observe that the terminal is not inaccessible for too long a period. Examples of suitable values are 5 seconds for the variable "x", respective 30 seconds for the variable "y". These periods of time can vary depending on the customer's and/or operator's wishes.

The way in which the terminal selects in which network it first it shall try to register can be made in three ways:
- according to a predefined priority list.
- by the terminal first trying with latest utilized network
- by manual selection

By means of the priority list the user or the operator can control which networks the terminal preferably shall register to. This list is implemented at the user's USIM-card. To facilitate for the user, a priority lists should be ready at the USIM-card when it is delivered to the user.

This list can be as below
1. TDD private
2. TDD public
3. FDD
4. GPRS
5. GSM

This order of preference gives for the operator the best utilization of the capacity in the networks and for most users the access with the best quality.

The user also can be given possibility to change in his/her priority list and have a number of different priority lists. Different priority lists can be useful if the USIM-card shall be used both in a data communication terminal and in a voice terminal, or if shall be used in different situations, for instance for private use or in the work. If a plurality of operators are involved, these of course can be arranged in the priority list according to wishes.

The operator or user may wish that the terminal in the first place shall register in the network where it latest was registered. In this case the terminal first tries to register there, but if this network is not accessible, it will search according to the alternatives in the priority list as is described below.

In certain situations the user may wish to control which network that shall be active, independent of priority. This may for instance be the case when the user wants to make a circuit switched call via GSM. This control also can be made indirectly by the user selecting a service which requires another network.

In the condition switched off the terminal is not active. When the terminal is started the process starts by register it in right network.

The automatic search and registration can be made either according to the predefined priority list, alternatively that the terminal first tries to register in the mode in which it latest was activated. If the latter is not possible, the priority list is used instead. The terminal searches for wanted network. It starts with the network that has highest priority, or in which it latest was registered. If the alternative "latest network" is used, the variable "n" set to the number of this network in the priority list. If it finds a network in which it can register, the search is finished. Otherwise it proceeds with next alternative in the priority list. The variable "n" used to move forward in the list. If no network has been found when the whole list has been gone through, the terminal starts from the beginning and scans the list.

When the terminal has found a network which is accessible and in which the terminal can register, connection is established to this network. The variable "network," adopts the value of the variable "n" which is the priority number of the active network.

The normal state/condition of the terminal is registered when it is in active state and it is registered in the selected network. The terminal will be in this state/condition until any of the following events occur:
- a network with higher priority is found
- the terminal loses coverage
- the user makes a manual selection of mode (either actively or by selecting a service which requires another network).

Search for network with higher priority is made when the terminal is in a network which does not have highest priority. This is made when the terminal is registered with certain intervals where the terminal first establishes that it is not already registered in the highest prioritized network. In this case the terminal returns to the state registered. If not, it makes a search of the networks that have higher priority. In no such network, is found, the terminal returns to the state registered. If network with higher priority is found, the terminal waits a period of time "x" before further measures are taken. This in order to make sure that the reception from the new network is not temporary.

If the new network still is accessible after the period of time "x", a disconnection is made of the previous network and a setup of the new network is made. The terminal after that returns to the state registered, now in the new network.

In case that the new network is not accessible after the period of time "x", the terminal returns to the state registered.

At disconnection, disconnection is made of network in question.

If the terminal loses coverage, by the signal strength from the network in question falling below one by the operator defined lowest level, the following will happen.

If the terminal loses coverage from the network in which it is registered, it shall wait the period of time "y" before measures are taken. This to make sure that the decrease of the signal strength is not temporary. If the network in question is accessible again after the period of time "y", the terminal returns to the state registered. If not, a disconnection is made of the network in question and the terminal starts scanning/searching for a new network as has been described above.

## Claims

1. Method for selection of radio network, where a multimode terminal (A) in a UMTS-system arranged to use a plurality of different radio interfaces to access UMTS user services associated with one and the same subscription via different operators performs selection of communication in one of a plurality of accessible radio networks, the radio networks are ranked according to given priority and connection is established to the radio network given the highest priority, and where the terminal:
- within a determined time interval checks whether radio network with higher priority than the utilised one is accessible, and
- checks whether a loss of contact has occurred in the initial connection to the selected radio network **characterized in that** the following steps are performed by the terminal:
- at establishing cat accessibility to network with higher priority, check if the contact is permanent,
- at loss of contact with the utilised radio network, check if the contact is permanently lost,
- permanent contact with an appointed network being established when the contact has a duration exceeding a value which is set to x seconds, and loss of contact with that radio network being established when the contact has been broken for a period having a duration of more than y seconds, and a new connection is established to the radio network of higher priority determined to be accessible and in permanent contact either in case of loss of contact with the previously utilised radio network, or in the case where there is no contact which results in the previously utilised radio network being then disconnected, and the new connection being then set up to the accessible radio network of higher priority.

2. Method as claimed in claims 1,
**characterized in that** search for accessible radio network runs through a step mechanism the value of which appoints the accessible radio networks in an order or priority which is indicated in a priority list.

3. Method as claimed in claim 2,
**characterized in that** a parameter, n, in the terminal is stepped up, **in that** the parameter, n, appoints the radio networks in an order of priority determined in the priority list, and **in that** the parameter, n, runs through a number of values corresponding to the number of radio networks to which the terminal is allowed to be connected.

4. Method as claimed in claims 3,
**characterized in that** the priority list appoints the radio networks in the order according to which they shall be utilised, and **in that** the value of the parameter, n, indicates a position in the priority list which indicates the appointed radio network.

5. Method as claimed in any of the claims 1-4,
**characterized in that** the radio networks are of different types, comprising GSM, GPRS or WLAN.

6. UMTS-system, including a number of radio networks and multimode terminals, arranged to be connected to the radio networks and arranged to use a plurality of different radio interfaces to access UMTS user services associated with one and the same subscription via different operators,
the radio networks being given a priority, and the terminals being arranged to select that one of the radio networks which has been allocated a highest priority, wherein the terminals comprise
- means for checking within a determined time interval, whether radio network with higher priority than the utilised one is accessible, and
- means for checking whether a loss of contact has occurred in the initial connection to the selected radio network or not, the system being **characterized in that** the terminals comprise
- means for checking, at establishing accessibility to the network with higher priority, whether the contact is permanent,
- means for checking at loss of contact with the utilised radio network, whether the contact is permanently lost,
permanent contact with an appointed network being established when the contact has a duration exceeding a value which is set to x seconds, and loss af contact with that radio network being established when the contact has been broken for a period having a duration of more than y seconds, and means for establishing a new connection to the radio network of higher priority determined to be accessible and in permanent contact either in case of loss of contact with the previously utilised radio network, or in the case where there is no loss of contact which results in the previously utilised radio network being disconnected and the new connection being then set up to the accessible radio network of higher priority.

7. System as claimed in claim 6,
**characterized in that** the terminal comprises means for running through, at search for accessible radio network, a step mechanism the value of which appoints the accessible radio networks in an order or priority which is indicated in a priority list.

8. System as claimed in claim 7,
**characterized in that** the terminals comprise means for running through a parameter, n, in the terminals, appointing the radio networks in an order of priority which is determined in the priority list, and **in that** the means for stepping up the parameter n are arranged to run the parameter, n, through a number of values corresponding to the number of radio networks to which the terminal is allowed to be connected.

9. System as claimed in claim 8,
**characterized in that** the terminals comprise means for appointing the radio networks in the order according to which they shall be utilised in accordance with the priority list, the value of the parameter, n, indicating a position in the priority list which indicates the appointed radio network.

10. System as claimed in any of the claims 6-9,
**characterized in that** an identity and access information card, USIM, in the terminal contains information for appointing the order of priority of the networks and for indicating the protocol to be used in respective network.

11. System as claimed in any of claims 6-10,
**characterized in that** the it is arranged to communicate in different types of radio networks, comprising GSM, GPRS or WLAN.

12. Multimode terminal in a UMTS-system arranged to use a plurality of different radio interfaces to access UMTS user services associated with one and the same subscription via different operators, which terminal is utilised at selection of communication in one of a plurality of accessible radio networks, said radio networks being placed in order of precedence according for a given priority and, connection being made to that one of the radio networks which has been allocated highest priority, the terminal comprises
- means for checking within a determined time interval, whether radio network with higher priority than the utilised one is accessible, and
- means for checking whether a loss of contact has occurred in the initial connection to the selected radio network, **characterized by**
- means for checking at establishing accessibility to network with higher priority, whether the contact is permanent,
- means for checking at loss of contact with the utilised radio network whether the contact is permanently lost or not, permanent contact with an appointed network being established when the contact has a duration exceeding a value which is set to x seconds, and loss of contact with that radio network being established when the contact has been broken for a period having a duration of more than y seconds, and
- means for establishing a new connection to the radio network of higher priority determined to be accessible and in permanent contact either in case of loss of contact with the previously utilised radio network, or in the case where there is no loss of contact which results in the previously utilised radio network being then disconnected and the new connection being set up to the accessible radio network of higher priority.

13. Terminal as claimed in claim 12,
**characterized in that** the terminal comprises means for running through, at search for accessible radio network, a step mechanism the value of which appoints the accessible radio networks in an order or priority which is indicated in a priority list.

14. Terminal as claimed in claim 13,
**characterized in that** means are provided for stepping up a parameter, n, in the terminal appointing the radio networks in an order or priority which is determined in the priority list, and **in that** the means for stepping up the parameter n are arranged to run the parameter, n, through a number of values corresponding to the number of radio networks to which the terminal is allowed two be connected.

15. Terminal as claimed in claim 14,
**characterized in that** means are provided for appointing the radio networks in the order according to which they shall be utilised in accordance with the priority list, the value of the parameter, n, indicating a position in the priority list which indicates the appointed radio network.

16. Terminal as claimed in any of the claim 12-15,
**characterized in that** an identity and access information card, USIM in the terminal contains information for appointing the order of priority of the networks and for indicating the protocol to be used in respective network.

17. Terminal as claimed in any of claims 12-16,
**characterized in that** it is arranged to communicate in different types of radio networks comprising GSM, GPRS or WLAN.

## Patentansprüche

1. Verfahren zum Auswählen eines Funknetzes, wo ein Mehrmodenendgerät (A) in einem UMTS-System, das dazu ausgebildet ist, eine Mehrzahl von unterschiedlichen Funkschnittstellen zu verwenden, um zu UMTS-Benutzerdiensten Zugang zu nehmen, die mit einem und demselben Teilnehmerverhältnis über unterschiedliche Betreiber verknüpft sind, Auswahl von Kommunikation in einem von einer Mehrzahl von zugänglichen Funknetzen durchführt, wobei die Funknetze gemäß gegebener Priorität in einer Rangordnung angeordnet sind und Verbindung mit dem Funknetz, dem die höchste Priorität gegeben ist, eingerichtet wird, und wobei das Endgerät:
- innerhalb eines vorbestimmten Zeitintervalls prüft, ob ein Funknetz mit höherer Priorität als das verwendete zugänglich ist, und
- prüft, ob ein Kontaktverlust bei der anfänglichen Verbindung mit dem ausgewählten Funknetz aufgetreten ist, **dadurch gekennzeichnet, dass** die folgenden Schritte durch das Endgerät durchgeführt werden:
- bei der Einrichtung der Zugänglichkeit zum einem Netz mit höherer Priorität prüfe, ob der Kontakt permanent ist,
- bei Verlust des Kontaktes mit dem verwendeten Funknetz prüfe, ob der Kontakt dauernd verloren ist,
- wobei ein permanenter Kontakt mit einem festgesetzten Netz festgestellt wird, wenn der Kontakt eine Dauer hat, die einen Wert überschreitet, der auf x Sekunden eingestellt ist, und wobei Verlust des Kontaktes mit dem Funknetz festgestellt wird, wenn der Kontakt für eine Periode unterbrochen ist, die eine Dauer von mehr als y Sekunden hat, und wobei eine neue Verbindung mit dem Funknetz höherer Priorität eingerichtet wird, das als zugänglich und in dauerndem Kontakt bestimmt worden ist, entweder im Fall des Verlustes des Kontaktes mit dem vorher verwendeten Funknetz oder im Falle, bei dem es keinen Kontakt gibt, was dazu führt, dass das vorher verwendete Funknetz getrennt wird und die neue Verbindung dann zum zugänglichen Funknetz höherer Priorität eingerichtet wird.

2. Verfahren nach Anspruch 1, **dadurch gekennzeichnet, dass** eine Suche nach einem zugänglichen Funknetz einen Schrittmechanismus durchläuft, dessen Wert die zugänglichen Funknetze in einer Reihenfolge oder Priorität festsetzt, die in einer Prioritätsliste angezeigt ist.

3. Verfahren nach Anspruch 2, **dadurch gekennzeichnet, dass** ein Parameter, n, im Endgerät hochgestuft wird, dass der Parameter, n, die Funknetze in einer Prioritätsreihenfolge bestimmt, die in der Prioritätsliste bestimmt ist, und dass der Parameter, n, Anzahl von Werten durchläuft, die der Anzahl von Funknetzen entspricht, mit denen das Endgerät berechtigt ist, verbunden zu werden.

4. Verfahren nach Anspruch 3, **dadurch gekennzeichnet, dass** die Prioritätsliste die Funknetze in der Reihenfolge festsetzt, in der sie verwendet werden sollen, und dass der Wert des Parameters, n, eine Position in der Prioritätsliste anzeigte die das festgesetzte Funknetz anzeigt.

5. Verfahren nach einem der Ansprüche 1 bis 4, **dadurch gekennzeichnet, dass** die Funknetze von unterschiedlichen Typen sind und GSM, GPRS oder WLAN aufweisen.

6. UMTS-System, das eine Anzahl von Funknetzen und Mehrmodenendgeräte einschließt, die dazu ausgebildet sind, mit den Funknetzen verbunden zu werden, und dazu ausgebildet sind, eine Mehrzahl von unterschiedlichen Funkschnittstellen zum verwenden, um Zugang zu UMTS-Benutzerdiensten, die mit einem und demselben Teilnehmerverhältnis verknüpft sind, über unterschiedliche Betreiber Zugang zu nehmen, wobei den Funknetzen eine Priorität gegeben ist und die Endgerät dazu ausgebildet sind, dasjenige der Funknetz auszuwählen, dem die höchste Priorität zugeordnet ist, wobei die Endgeräte aufweisen
- Mittel zum Prüfen innerhalb eines vorbestimmten Zeitintervalls, ob ein Funknetz mit einer höheren Priorität als das verwendete zugänglich ist, und
- Mittel zum Überprüfen, ob ein Kontaktverlust in der anfänglichen Verbindung zu dem ausgewählten Funknetz aufgetreten ist oder nicht, welches System **dadurch gekennzeichnet ist, dass** die Endgeräte aufweisen
- Mittel zum Prüfen bei der Feststellung der Zugänglichkeit zu dem Netz mit höherer Priorität, ob der Kontakt permanent ist,
- Mittel zum Prüfen beim Verlust von Kontakt mit dem verwendeten Funknetz, ob der Kontakt dauernd verloren ist,
wobei dauernder Kontakt mit einem festgesetzten Netz festgestellt wird, wenn der Kontakt eine Dauer hat, die einen Wert überschreitet, der auf x Sekunden eingestellt ist, und Verlust des Kontaktes mit dem Funknetz festgestellt wird, wenn der Kontakt für eine Zeitdauer unterbrochen ist, die eine Dauer von mehr als y Sekunden hat, und Mittel, eine neue Verbindung zum Funknetz höherer Priorität einzurichten, das als zugänglich und in dauerndem Kontakt festgestellt ist oder wird entweder im Falle des Verlustes des Kontaktes mit dem vorher verwendeten Funknetz oder im Falle, wo es keinen Verlust des Kontaktes gibt, was dazu führt, dass das vorher verwendete Funknetz getrennt wird und die neue Verbindung dann zum zugänglichen Funknetz höherer Priorität eingerichtet wird.

7. System nach Anspruch 6, **dadurch gekennzeichnet, dass** das Endgerät Mittel zum Durchlaufen eines Schrittmechanismus bei der Suche nach einem zugänglichen Funknetzwerk aufweist, dessen Wert die zugänglichen Funknetze in einer Reihenfolge oder Priorität festsetzt, die durch eine Prioritätsliste angezeigt ist,

8. System nach Anspruch 7, **dadurch gekennzeichnet, dass** die Endgerät Mittel zum Durchlaufen eines Parameters, n, in den Endgeräten aufweist, der die Funknetze in einer Prioritätsreihenfolge festsetzt, die in der Prioritätsliste bestimmt ist, und dass die Mittel zum Hochstufen des Parameters n dazu ausgebildet sind, den Parameter, n, eine Anzahl von Werten durchlaufen zu lassen, die der Anzahl von Funknetzen entspricht, mit denen das Endgerät verbunden werden darf.

9. System nach Anspruch 2, **dadurch gekennzeichnet, dass** die Endgerät Mittel zum Festsetzen der Funknetze in der Reihenfolge aufweisen, in der sie in Übereinstimmung mit der Prioritätsliste benutzt werden sollen, wobei der Parameter, n, eine Position in der Prioritätsliste anzeigt, die das festgesetzte Funknetz anzeigt.

10. System nach einem der Ansprüche 6 bis 9, **dadurch gekennzeichnet, dass** eine Identitäts- und Zugangsinformationskarte, USIM, im Endgerät Information zum Festsetzen der Prioritätsreihenfolge der Netze und zum Anzeigen des Protokolls enthält, das in dem entsprechenden Netz benutzt werden soll.

11. System nach einem der Ansprüche 6 bis 10, **dadurch gekennzeichnet, dass** es dazu ausgebildet ist, in unterschiedlichen Typen von Funknetzen zu kommunizieren, die GSM, GPRS oder WLAN aufweisen.

12. Mehrmodenendgerät in einem UMTS-System, das dazu ausgebildet ist, eine Mehrzahl von unterschiedlichen Funkschnittstellen zu verwenden, um Zugang zu UMTS-Benutzerdiensten, die mit einem und demselben Teilnehmerverhältnis verknüpft sind, über unterschiedliche Betreiber zu nehmen, welches Endgerät bei der Auswahl von Kommunikation in einer der Mehrzahl von zugänglichen Funknetzen verwendet wird, wobei die Funknetze in einer Dringlichkeitsreihenfolge gemäß einer gegebenen Priorität angeordnet sind und Verbindung zu demjenigen der Funknetze hergestellt wird, dem die höchste Priorität zugeordnet ist, welches Endgerät aufweist:
Mittel zum Prüfen innerhalb eines vorbestimmten Zeitintervalls, ob ein Funknetz mit höherer Priorität als das verwendete zugänglich ist, und
- Mittel zum Prüfen ob ein Kontaktverlust der ursprünglichen Verbindung zu dem ausgewählten Funknetz aufgetreten ist,
**gekennzeichnet durch**
- Mittel zum Prüfen beim Feststellen der Zugänglichkeit zu einem Netzwerk mit höherer Priorität, ob der Kontakt dauernd ist,
- Mittel zum Prüfen beim Verlust des Kontakts mit dem verwendeten Funknetz, ob der Kontakt dauernd verloren ist oder nicht, wobei dauernder Kontakt mit einem festgesetzten Netz eingerichtet wird, wenn der Kontakt eine Dauer hat, die einen Wert überschreitet, der auf x Sekunden eingestellt ist, und Verlust des Kontaktes mit dem Funknetz festgestellt wird, wenn der Kontakt für eine Periode unterbrochen worden ist, die eine Dauer von mehr als y Sekunden hat, und
- Mittel zum Einrichten einer neuen Verbindung zum Funknetz höherer Priorität, das als zugänglich und in dauerndem Kontakt bestimmt ist, entweder im Falle eines Verlustes des Kontaktes mit dem vorher verwendeten Funknetz oder im Falle, wo es keinen Verlust des Kontaktes gibt, was dazu führt, dass das vorher verwendete Funknetz dann getrennt wird und die neue Verbindung zu dem zugänglichen Funknetz höherer Priorität eingerichtet wird,

13. Endgerät nach Anspruch 12, **dadurch gekennzeichnet, dass** das Endgerät Mittel zum Durchlaufen eines Schrittmechanismus bei der Suche nach einem zugänglichen Funknetz aufweist, dessen Wert die zugänglichen Funknetze in einer Prioritätsreihenfolge festsetzt, die in einer Prioritätsliste angezeigt ist.

14. Endgerät nach Anspruch 13, **dadurch gekennzeichnet, dass** Mittel zum Hochstufen eines Parameters, n, in dem Endgerät vorgesehen sind, der die Funknetz in einer Prioritätsreihenfolge festsetzt, die in der Prioritätsliste bestimmt ist, und dass die Mittel zum Hochstufen des Parameters n dazu ausgebildet sind, den Parameter, n, eine Anzahl von Werten durchlaufen zu lassen, die der Anzahl von Funknetzen entspricht, mit denen das Endgerät verbunden werden darf.

15. Endgerät nach Anspruch 14, **dadurch gekennzeichnet, dass** Mittel vorgesehen sind, um die Funknetze in der Reihenfolge festzusetzen, gemäß der sie in Übereinstimmung mit der Prioritätsliste verwendet werden sollen, wobei der Wert des Parameters, n, eine Position in der Prioritätsliste anzeigt, die das festgesetzte Funknetz anzeigt.

16. Endgerät nach einem der Ansprüche 12 bis 15, **dadurch gekennzeichnet, dass** eine Identitäts- und Zugangsinformationskarte, USIM, im Endgerät Information zum Festsetzen der Prioritätsreihenfolge der Netze und zum Anzeigen des Protokolls enthält, das im entsprechenden Netz verwendet werden soll.

17. Endgerät nach einem der Ansprüche 12 bis 16, **dadurch gekennzeichnet, dass** es dazu ausgebildet ist, in unterschiedlichen Typen von Funknetzen zu kommunizieren, die GSM, GPRS oder WLAN einschließen.

## Revendications

1. Procédé de sélection d'un réseau radio, dans lequel un terminal à mode multiple (A) dans un système UMTS agencé de manière à utiliser une pluralité d'interfaces radio différentes afin d'accéder à des services d'utilisateur UMTS associés à un seul et même abonnement par l'intermédiaire d'opérateurs différents exécute la sélection de communication dans l'un d'une pluralité de réseaux radio accessibles, les réseaux radio sont classés selon une priorité donnée et la connexion est établie sur le réseau radio affecté de la priorité la plus haute, et dans lequel le terminal :
à l'intérieur d'un intervalle de temps déterminé, contrôle si un réseau radio présentant une priorité supérieure à celle de celui utilisé est accessible, et
contrôle si une perte de contact s'est produite au niveau de la connexion initiale sur le réseau radio sélectionné, **caractérisé en ce que** les étapes suivantes sont mises en oeuvre par le terminal :
lors de l'établissement de l'accessibilité au réseau avec la priorité la plus élevée, contrôle du fait que le contact est permanent,
lors de la perte de contact avec le réseau radio utilisé, contrôle du fait que le contact est perdu de manière permanente,
un contact permanent avec un réseau désigné étant établi lorsque le contact présente une durée excédant une valeur qui est définie à x secondes, et une perte de contact avec ce réseau radio étant établie lorsque le contact a été rompu pendant une période présentant une durée supérieure à y secondes, et une nouvelle connexion est établie avec le réseau radio d'une priorité supérieure déterminé comme étant accessible et en contact permanent soit en cas de perte de contact avec le réseau radio utilisé précédemment, soit dans le cas où il n'existe aucun contact ce qui conduit à la déconnexion du réseau radio utilisé précédemment, la nouvelle connexion étant alors établie sur le réseau radio accessible de priorité supérieure.

2. Procédé selon la revendication 1,
**caractérisé en ce que** la recherche de réseau radio accessible est exécutée par l'intermédiaire d'un mécanisme par échelon dont la valeur désigne les réseaux radio accessibles suivant un ordre de priorité qui est indiqué dans une liste de priorité.

3. Procédé selon la revendication 2,
**caractérisé en ce qu'**un paramètre, n, sur le terminal est incrémenté, **en ce que** le paramètre, n, désigne les réseaux radio suivant un ordre de priorité déterminé dans la liste de priorité, et **en ce que** le paramètre, n, passe par un certain nombre de valeurs correspondant au nombre de réseaux radio auxquels le terminal est autorisé à être connecté.

4. Procédé selon la revendication 3,
**caractérisé en ce que** la liste de priorité désigne les réseaux radio dans l'ordre selon lequel ils doivent être utilisés, et **en ce que** la valeur du paramètre, n, indique une position sur la liste de priorité qui indique le réseau radio désigné.

5. Procédé selon l'une quelconque des revendications 1 à 4, **caractérisé en ce que** les réseaux radio sont de types différents, comprenant le GSM, le GPRS ou le WLAN.

6. Système UMTS, comportant un certain nombre de réseaux radio et de terminaux à mode multiple, agencés de manière à être connectés aux réseaux radio et agencés afin d'utiliser une pluralité d'interfaces radio différentes afin d'accéder à des services d'utilisateur UMTS associés à un seul et même abonnement par l'intermédiaire d'opérateurs différents, les réseaux radio étant affectés d'une priorité, et les terminaux étant agencés afin de sélectionner celui des réseaux radio qui a été affecté de la priorité la plus élevée, dans lequel les terminaux comprennent:
des moyens destinés à contrôler, dans un intervalle de temps prédéterminé, si le réseau radio qui présente une priorité supérieure à celle de celui qui est utilisé est accessible, et
des moyens destinés à contrôler si une perte de contact s'est produite lors de la connexion initiale avec le réseau radio sélectionné ou non, le système étant **caractérisé en ce que** les terminaux comprennent:
des moyens destinés à contrôler, lors de l'établissement d'accessibilité au réseau avec une priorité plus élevée, le fait que le contact est permanent,
des moyens destinés à contrôler, lors d'une perte de contact avec le réseau radio utilisé, si le contact est perdu de manière permanente,
un contact permanent avec un réseau désigné étant établi lorsque le contact présente une durée excédant une valeur qui est définie à x secondes, et une perte de contact avec ce réseau radio étant établie lorsque le contact a été rompu pendant une période présentant une durée supérieure à y secondes, et des moyens destinés à établir une nouvelle connexion sur le réseau radio de priorité supérieure déterminé comme étant accessible et en contact permanent soit en cas de perte de contact avec le réseau radio utilisé précédemment, soit dans le cas où il n'existe aucune perte de contact ce qui conduit à la déconnexion du réseau radio utilisé précédemment, la nouvelle connexion étant alors établie sur le réseau radio accessible de priorité supérieure.

7. Système selon la revendication 6,
**caractérisé en ce que** le terminal comprend des moyens destinés à exécuter, lors de la recherche de réseau radio accessible, un mécanisme par échelon dont la valeur désigne les réseaux radio accessibles suivant un ordre ou priorité qui est indiqué dans une liste de priorité.

8. Système selon la revendication 7,
**caractérisé en ce que** les terminaux comprennent des moyens destinés à faire varier un paramètre, n, sur les terminaux, désignant les réseaux radio suivant un ordre de priorité qui est déterminé dans la liste de priorité, et **en ce que** les moyens destinés à incrémenter le paramètre, n, sont agencés de manière à faire varier le paramètre, n, en passant par un certain nombre de valeurs correspondant au nombre de réseaux radio avec lesquels le terminal est autorisé à être connecté.

9. Système selon la revendication 8,
**caractérisé en ce que** les terminaux comprennent des moyens destinés à désigner les réseaux radio dans l'ordre selon lequel ils doivent être utilisés en fonction de la liste de priorité, la valeur du paramètre, n, indiquant une position sur la liste de priorité qui indique le réseau radio désigné.

10. Système selon l'une quelconque des revendications 6 à 9,
**caractérisé en ce qu'**une carte d'informations d'identité et d'accès, USIM, dans le terminal contient des informations destinées à désigner l'ordre de priorité des réseaux et à indiquer le protocole à utiliser dans le réseau respectif.

11. Système selon l'une quelconque des revendications 6 à 10,
**caractérisé en ce qu'**il est agencé de manière à communiquer sur différents types de réseaux radio, comprenant le GSM, le GPRS ou le WLAN.

12. Terminal à mode multiple dans un système UMTS agencé de manière à utiliser une pluralité d'interfaces radio différentes afin d'accéder à des services d'utilisateur UMTS associés à un seul et même abonnement par l'intermédiaire d'opérateurs différents, lequel terminal est utilisé lors de la sélection de communication dans l'un d'une pluralité de réseaux radio accessibles, lesdits réseaux radio étant placés suivant un ordre de priorité en fonction d'une priorité donnée et, la connexion étant réalisée avec celui des réseaux radio qui a été affecté de la priorité la plus haute, le terminal comprend :
des moyens destinés à contrôler, dans un intervalle de temps déterminé, si le réseau radio avec une priorité supérieure à celle de celui qui est utilisé est accessible, et
des moyens destinés à contrôler si une perte de contact s'est produite lors de la connexion initiale avec le réseau radio sélectionné,
**caractérisé par**
des moyens destinés à contrôler, lors de l'établissement de l'accessibilité au réseau avec la priorité la plus élevée, si le contact est permanent,
des moyens destinés à contrôler lors de la perte de contact avec le réseau radio utilisé si le contact est perdu de manière permanente ou non, un contact permanent avec un réseau désigné étant établi lorsque le contact présente une durée excédant une valeur qui est définie à x secondes, et une perte de contact avec ce réseau radio étant établie lorsque le contact a été rompu pendant une période présentant une durée supérieure à y secondes, et
des moyens destinés à établir une nouvelle connexion avec le réseau radio d'une priorité supérieure déterminé comme étant accessible et en contact permanent soit en cas de perte de contact avec le réseau radio utilisé précédemment, soit dans le cas où il n'existe pas de perte de contact ce qui conduit alors à la déconnexion du réseau radio utilisé précédemment, la nouvelle connexion étant établie sur le réseau radio accessible de priorité supérieure.

13. Terminal selon la revendication 12,
**caractérisé en ce que** le terminal comprend des moyens destinés à exécuter, lors la recherche de réseau radio accessible, un mécanisme par échelon dont la valeur désigne les réseaux radio accessibles suivant un ordre ou priorité qui est indiqué dans une liste de priorité.

14. Terminal selon la revendication 13,
**caractérisé en ce que** des moyens sont prévus de manière à incrémenter un paramètre, n, sur le terminal, désignant les réseaux radio dans un ordre de priorité qui est déterminé sur la liste de priorité, et **en ce que** les moyens d'incrémentation du paramètre, n, sont agencés de manière à faire varier le paramètre, n, à travers un certain nombre de valeurs correspondant au nombre de réseaux radio auxquels le terminal est autorisé à être connecté.

15. Terminal selon la revendication 14,
**caractérisé en ce que** des moyens sont agencés afin de désigner les réseaux radio dans l'ordre selon lequel ils doivent être utilisés en fonction de la liste de priorité, la valeur du paramètre, n, indiquant une position sur la liste de priorité qui indique le réseau radio désigné.

16. Terminal selon l'une quelconque des revendications 12 à 15,
**caractérisé en ce qu'**une carte d'informations d'identité et d'accès USIM, dans le terminal contient des informations destinées à désigner l'ordre de priorité des réseaux et à indiquer le protocole à utiliser dans le réseau respectif.

17. Terminal selon l'une quelconque des revendications 12 à 16
**caractérisé en ce qu'**il est agencé de manière à communiquer sur différents types de réseaux radio, comprenant le GSM, le GPRS ou le WLAN.
